# EUROPEAN PATENT SPECIFICATION

(11) **EP 3 064 409 B1**
(45) Date of publication and mention of the grant of the patent: **11.07.2018**
(21) Application number: 14856882.7
(22) Date of filing: 31.10.2014
(51) Int. Cl.: B60T 17/00, B60T 15/36, B60T 13/66, B60T 17/22

(54) **RAILROAD CAR BREAK SYSTEM**
EISENBAHNWAGGON-BREMSANLAGE
DISPOSITIF DE FREIN DE VÉHICULE DE CHEMINS DE FER

(30) Priority: 01.11.2013 JP 2013228570
(43) Date of publication of application: 07.09.2016
(73) Proprietor: Railway Technical Research Institute, Kokubunji-shi, Tokyo 185-8540 (JP); Nippon Steel & Sumitomo Metal Corporation, Tokyo 100-8071 (JP)
(72) Inventor: SAGA Shin-ichi, Kokubunji-shi Tokyo 185-8540 (JP); SAWADA Masanori, Tokyo 100-8071 (JP); SAKAGUCHI Atsushi, Tokyo 100-8071 (JP)
(74) Representative: Vossius & Partner Patentanwälte Rechtsanwälte mbB
(86) International application number: PCT/JP2014/079108
(87) International publication number: WO 2015/064751

(56) References cited:
- JP-A- H07 257 339
- JP-A- 2000 177 587
- JP-A- 2009 119 963
- JP-A- 2012 011 984

## Description

### [Technical Field of the Invention]

The prevent invention relates to a vehicle brake apparatus.

### [Related Art]

Patent Document 1 discloses a brake system for the Shinkansen railroad vehicle or a conventional railroad vehicle, which includes an emergency brake control device supplying a pressure fluid to an actuator that is a brake cylinder.

The brake system disclosed in Patent Document 1 includes a brake control device; an emergency pressure generation unit; a double check valve; and a pressure intensifier cylinder (brake cylinder). The brake control device receives an emergency brake command output from an upper system, and supplies a pressure fluid (hereinafter, referred to as first compressed air), which has a pressure (first air pressure) corresponding to the emergency brake command, to the double check valve.

The pressure generation unit includes a pressure regulating valve and a solenoid valve. The pressure regulating valve regulates the pressure of a pressure fluid (hereinafter, referred to as second compressed air), which is supplied from an air source different from the brake control device, to a predetermined second air pressure, and supplies the second compressed air having the second air pressure to the solenoid valve. The state of the solenoid valve is changed from a closed state to an open state only when the solenoid valve receives the emergency brake command, and the solenoid valve supplies the second compressed air to the double check valve.

The double check valve selectively supplies one compressed air having a higher pressure among the first compressed air supplied from the brake control device and the second compressed air supplied from the pressure generation unit to the pressure intensifier cylinder. The pressure intensifier cylinder transforms the pressure of the compressed air supplied from the double check valve into an oil pressure. The oil pressure presses brake pads against a brake disc such that a braking force is applied to the brake disc.

### [Prior Art Document]

### [Patent Document]

[Patent Document 1] Japanese Unexamined Patent Application, First Publication No. 2012-11984

### [Disclosure of the Invention]

### [Problems to be Solved by the Invention]

In a brake operation system of the brake system disclosed in Patent Document 1, the pressure generation unit is additionally provided which includes the pressure regulating valve that regulates the air pressure of the second compressed air supplied from the air source to a predetermined emergency air pressure (the second air pressure). As a result, the entire configuration of the brake operation system becomes complicated, which is a problem.

The brake system disclosed in Patent Document 1 adopts a configuration in which the length of a pipeline between the pressure generation unit and the double check valve (switching valve) is short. However, since the pressure generation unit is additionally provided in the brake operation system, the length of the pipeline between the pressure generation unit and the double check valve is still long. For this reason, in the brake system disclosed in Patent Document 1, the length of time (free running time) required from the generation of an emergency brake command until the internal pressure of the pressure intensifier cylinder reaches a specified value (lower limit value of the pressure required to generate an effective braking force: for example, 63% of the normal value of the first air pressure) is still long, and a problem such as an emergency brake operation being delayed (the free running distance of a vehicle is increased) has not yet been solved.

The present invention is made in light of this problem, and an object of the present invention is to provide a vehicle brake apparatus capable of reducing the free running time of a vehicle during emergency braking by adopting a simple configuration.

### [Measures for Solving the Problem]

The present invention adopts the following measures so as to solve this problem and achieve this object. According to the invention vehicle brake apparatus as defined in claim 1 is provided. The dependent claims define preferred embodiments.

In the vehicle brake apparatus according to claim 1, (1), it is possible to reduce the length of a pipeline between the second tank and the brake cylinder. As a result, when the emergency brake operation is performed, since the second compressed air inside the second tank is quickly supplied as the emergency brake air to the brake cylinder via the short pipeline, the internal pressure of the brake cylinder can be quickly increased to a specified value (lower limit value of the pressure required to generate an effective braking force). Accordingly, it is possible to reduce the free running time from when the emergency brake operation is performed until the internal pressure of the brake cylinder reaches the specified value.

In addition, since the second compressed air inside the second tank provided on the bogie of the vehicle is directly supplied as the emergency brake air to the brake cylinder, it is possible to omit the installation of an air source, a pressure regulating valve, and a control device thereof which are additionally provided in a conventional brake system. As a result, it is possible to simplify the entire configuration of the vehicle brake apparatus. As described above, the vehicle brake apparatus according to (1) is capable of reducing the free running time of the vehicle during emergency braking by adopting a simple configuration.

(2) In the vehicle brake apparatus according to (1), the second pressure control device may include a switching valve that supplies one compressed air having a higher pressure among the brake control air and the emergency brake air to the brake cylinder; and an opening and closing valve which is inserted into a pipeline connecting the second tank with the switching valve, and opens when the emergency brake operation is performed.
   In the vehicle brake apparatus according to (2), when the emergency brake operation is performed due to a cause such as the occurrence of an earthquake, the opening and closing valve opens, and then the second compressed air inside the second tank is supplied as the emergency brake air to the switching valve. One compressed air having a higher pressure among the brake control air and the emergency brake air is supplied to the brake cylinder via the switching valve. Accordingly, in a case where the pressure of the brake control air supplied from the first pressure control device is still low, the emergency brake air supplied from the second tank is preferentially supplied to the brake cylinder. As a result, it is possible to quickly increase the internal pressure of the brake cylinder to the specified value, and it is possible to effectively apply the braking force to the wheels for an emergency stop.
(3) In the vehicle brake apparatus according to (1) or (2), the pressure of the emergency brake air may be lower than or equal to the pressure of the brake control air.
   In the vehicle brake apparatus according to (3), when the emergency brake operation is performed, even if the second compressed air inside the second tank is preferentially supplied as the emergency brake air to the brake cylinder, the internal pressure of the brake cylinder is not abnormally increased. Accordingly, it is possible to prevent the occurrence of trouble such as the wheels being locked and slipping during emergency braking.
(4) In the vehicle brake apparatus according to claim 1, the second tank is an auxiliary air tank that supplies the second compressed air to an air spring installed between the bogie and the vehicle body.
   In the vehicle brake apparatus according to (4), since an existing auxiliary air tank installed on the bogie is used as the second tank, and the second compressed air, which is primarily supplied from the auxiliary air tank only to the air spring, is also supplied as the emergency brake air to the brake cylinder, it is not necessary to provide extra equipment such as the air source, the pressure regulating valve, and the control device thereof which are additionally provided in the conventional brake system. For this reason, it is possible to reduce the free running time of the vehicle during emergency braking by implementation of a simple configuration.
(5) In the vehicle brake apparatus according to (4), the second tank may include a pair of the auxiliary air tanks which are respectively installed on both lateral sides of the bogie. The pair of the auxiliary air tanks may be connected to each other via a differential pressure valve. The second compressed air inside one of the auxiliary air tanks may be used as the emergency brake air.
   In the vehicle brake apparatus according to (5), it is possible to ensure a predetermined volume of the auxiliary air tanks on the bogie. As a result, it is possible to quickly increase the internal pressure of the brake cylinder to the specified value during emergency braking.
(6) The vehicle brake apparatus according to any one of (1) to (5) may further include a tread cleaning device that operates an abrasive block by supplying a tread cleaning air to a tread cleaning cylinder which operates the abrasive block. The tread cleaning device may supply an emergency cleaning air, which has a pressure lower than or equal to the pressure of the tread cleaning air, to the tread cleaning cylinder prior to supplying the tread cleaning air when the emergency brake operation is performed.
   In the vehicle brake apparatus according to (6), the tread cleaning cylinder is operated within a very short period of time from the starting of the emergency brake operation such that the abrasive block is capable of cleaning the corresponding wheel tread. As a result, it is possible to effectively perform the subsequent emergency brake operation.
(7) In the vehicle brake apparatus according to (6), the second compressed air inside the second tank may be used as the emergency cleaning air for a tread cleaning.
   In the vehicle brake apparatus according to (7), since the auxiliary air tank (second tank) is used as a supply source of the emergency cleaning air which supplies the second compressed air to the air spring between the bogie and the vehicle body, it is not necessary to provide special equipment in a conventional tread cleaning system. For this reason, the second compressed air inside the auxiliary air tank is supplied as the emergency cleaning air to the tread cleaning cylinder such that the internal pressure of the tread cleaning cylinder can be quickly increased to a specified value (lower limit value of the pressure required for the abrasive block to effectively clean the corresponding wheel tread).
   In addition, it is possible to reduce the length of the pipeline between the second tank and the tread cleaning cylinder in a tread cleaning system by using the auxiliary air tank (second tank), which supplies the second compressed air to the air spring between the vehicle body and the bogie, as the supply source of the emergency cleaning air. Accordingly, the second compressed air inside the second tank is quickly supplied as the emergency cleaning air to the tread cleaning cylinder in the tread cleaning system via the short pipeline. As a result, it is possible to quickly increase the internal pressure of the tread cleaning cylinder to the specified value.
(8) In the vehicle brake apparatus according to (7), the second tank may include a pair of the auxiliary air tanks which are respectively installed on both lateral sides of the bogie. The pair of the auxiliary air tanks may be connected to each other via a differential pressure valve. The second compressed air inside one of the auxiliary air tanks may be used as the emergency brake air. The second compressed air inside the other of the auxiliary air tanks may be used as the emergency cleaning air. The pair of the auxiliary air tanks may supply the emergency brake air and the emergency cleaning air when a first opening and closing valve and a second opening and closing valve are opened and closed which are installed corresponding to the pair of the auxiliary air tanks.

In the vehicle brake apparatus according to (8), the pair of the auxiliary air tanks forming the second tanks may be used as air sources, and supply emergency air (emergency brake air and emergency cleaning air) to the brake cylinder and the tread cleaning cylinder such that the air can be quickly supplied at a set pressure.

### [Effects of the Invention]

According to the aspect, it is possible to reduce the free running time of a vehicle during emergency braking by a simple configuration. That is, according to the aspect, it is possible to reduce the free running distance (value obtained by multiplying the movement speed of the vehicle by the free running time) of the vehicle during emergency braking. Accordingly, particularly, in a vehicle moving at a high speed, the aforementioned effects become a great merit in the viewpoint of improved safety.

### [Brief Description of the Drawings]

FIG. 1A is a schematic view showing the Shinkansen vehicle to which a vehicle brake apparatus in a first embodiment of the present invention is applied.
FIG. 1B is a schematic block diagram showing the configuration of the vehicle brake apparatus in the first embodiment of the present invention.
FIG. 2 is a top view showing the specific piping of the vehicle brake apparatus in FIG. 1A.
FIG. 3 is a top view showing the piping of a bogie in the related art for comparison with FIG. 2.
FIG. 4 is a table showing a brake cylinder (BC) pressure set according to the speed of a vehicle.
FIG. 5 is a graph showing a brake cylinder pressure after an emergency brake command is generated in the bogie according to the related art.
FIG. 6 is a table showing a relationship between an initial speed and a free running distance.
FIG. 7 is a graph showing brake cylinder pressures after an emergency brake command is generated in a bogie of the present invention.
FIG. 8 is a graph showing a combination of the brake cylinder pressures in FIG. 7.
FIG. 9 is a view specifically showing a vehicle brake apparatus in a second embodiment of the present invention.
FIG. 10 is a top view showing the specific piping of the vehicle brake apparatus in FIG. 9.
FIG. 11 is a top view showing the piping of a bogie in the related art for comparison with FIG. 10.
FIG. 12 is a timing chart showing the brake cylinder pressures of the vehicle brake apparatus in the second embodiment.
FIG. 13 is a graph showing measurement results of the free running time of a tread cleaning cylinder in a case where a second compressed air inside an auxiliary air tank is used as an emergency cleaning air having an air spring (AS) pressure.
FIG. 14 is a graph showing measurement results of the free running time of a pressure intensifier cylinder in a case where the second compressed air inside the auxiliary air tank is used as an emergency brake air having the AS pressure.

### [Embodiments of the Invention]

### (First Embodiment)

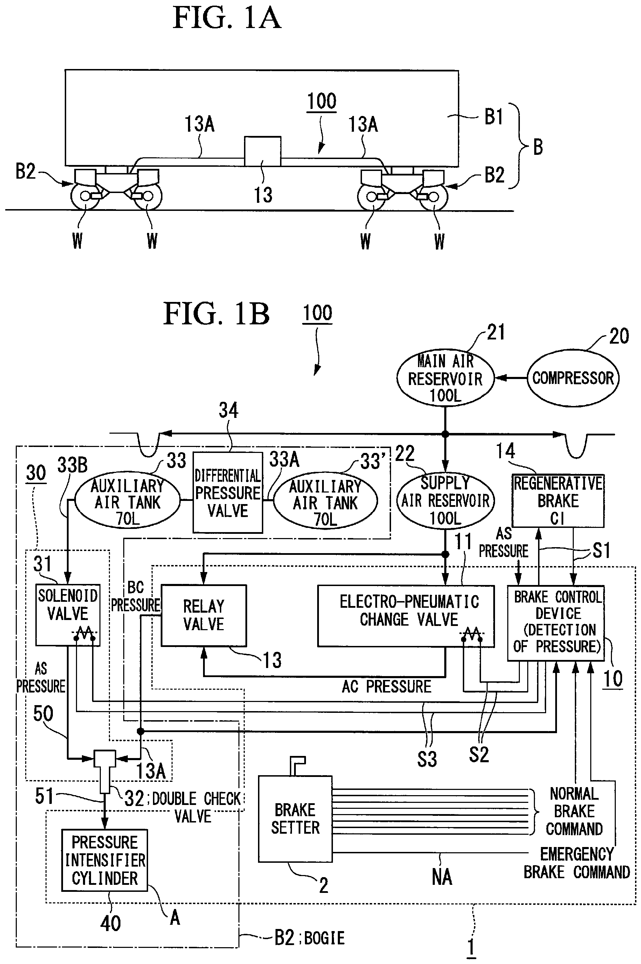

First, a first embodiment of the present invention will be described with reference to FIGS. 1A to 8. FIG. 1A is a schematic view showing a high-speed railroad vehicle B for the Shinkansen or the like, to which a vehicle brake apparatus 100 in the first embodiment is applied. FIG. 1B is a schematic diagram showing the configuration of the vehicle brake apparatus 100. The vehicle B, on which the vehicle brake apparatus 100 is mounted, is provided with a brake operation system 1 in which a brake cylinder A is operated to apply braking force to wheels W.

The brake operation system 1 is operated based on an eight-step notch signal that is output as a normal brake command from a brake setter 2 disposed on a control platform (not shown) of the vehicle B, and based on an emergency brake command NA that is output from the brake setter 2. When a normal brake operation is performed via the control platform, the notch signal is output as a normal brake command from the brake setter 2. When an emergency brake operation is performed via the control platform, the emergency brake command NA is output from the brake setter 2.

The brake operation system 1 includes the brake cylinder A; a brake control device 10; an electro-pneumatic change valve 11; and a relay valve 13. The brake cylinder A is installed on a bogie B2 of the vehicle B. In contrast, the brake control device 10, the electro-pneumatic change valve 11, and the relay valve 13 are installed on a vehicle body B1 of the vehicle B. The brake control device 10, the electro-pneumatic change valve 11, and the relay valve 13 form a first pressure control device that transforms first compressed air inside first tanks (a main air tank 21 and a supply air tank 22), which are provided on the vehicle body B1, into brake control air having a predetermined pressure (BC pressure), and supplies the brake control air to the brake cylinder A, which will be described in detail later.

The brake control device 10 is a controller that performs a brake operation based on the normal brake command (notch signal) and the emergency brake command NA output from the brake setter 2.

The brake control device 10 outputs a normal brake control signal S1 to a regenerative brake 14 so as to operate the regenerative brake 14, based on the notch signal, and outputs a brake control signal S2 to the electro-pneumatic change valve 11 so as to operate the electro-pneumatic change valve 11. The brake control device 10 outputs an emergency brake control signal S3 to an additional emergency brake solenoid valve 31 of an emergency pressure control device 30 (to be described later) so as to open the additional emergency brake solenoid valve 31, based on the emergency brake command NA.

The main air tank (main air reservoir) 21, the air of which is compressed by a compressor 20, and the supply air tank (supply air reservoir) 22 connected to the main air tank 21 are installed on the vehicle body B1 of the bogie B2. The main air tank 21 and the supply air tank 22 are the first tanks that store the first compressed air (compressed air).

The first compressed air stored in the supply air tank 22 is supplied to the electro-pneumatic change valve 11. The opening of the electro-pneumatic change valve 11 is changed according to the brake control signal S2 that is set based on the magnitude of the notch signal. That is, the first compressed air, which is supplied from the supply air tank 22 to the electro-pneumatic change valve 11, is transformed into compressed air (hereinafter, referred to as pressure command air) having a pressure (hereinafter, referred to as an air control (AC) pressure) according to the magnitude of the notch signal. The pressure command air having the AC pressure is supplied from the electro-pneumatic change valve 11 to the relay valve 13.

The first compressed air is supplied from the supply air tank 22 to the relay valve 13, and the pressure command air having the AC pressure is supplied from the electro-pneumatic change valve 11 to the relay valve 13. The opening of the relay valve 13 is changed according to the AC pressure of the pressure command air. That is, the first compressed air, which is supplied from the supply air tank 22 to the relay valve 13, is transformed into compressed air (hereinafter, referred to as brake control air) having a pressure (hereinafter, referred to as a brake cylinder (BC) pressure) according to the AC pressure of the pressure command air. The brake control air having the BC pressure is supplied from the relay valve 13 to a double check valve 32 of the emergency pressure control device 30 via a pipeline 13A.

Hereinafter, the emergency pressure control device (second pressure control device) 30 of the vehicle brake apparatus 100 will be described with reference to FIGS. 1B, 2, and 3.

The emergency pressure control device 30 is installed on the bogie B2 outside of the brake operation system 1. During an emergency in which an urgent stop of the vehicle B is required, the emergency pressure control device 30 supplies the emergency brake air to the brake cylinder A so as to quickly increase the internal pressure of the brake cylinder A to a specified value (lower limit value of the pressure required to generate an effective braking force). The emergency pressure control device 30 includes the additional emergency brake solenoid valve 31 and the double check valve 32.

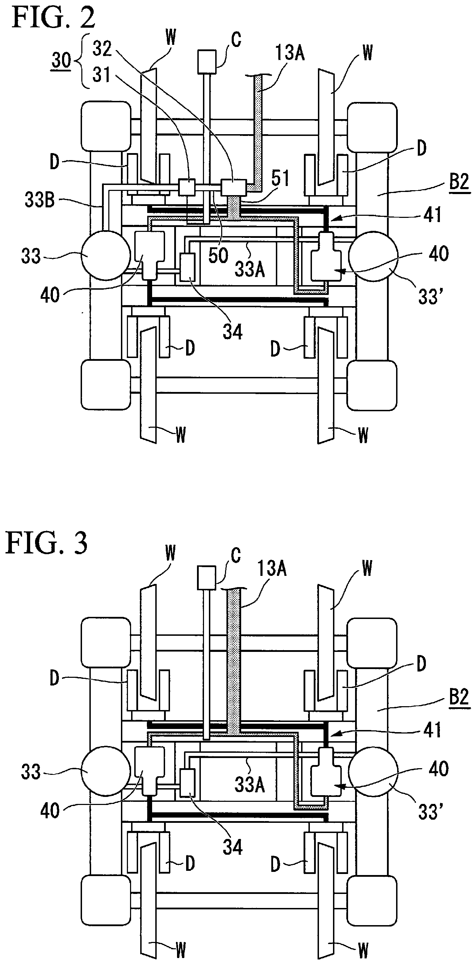

An auxiliary air tank is installed as a second tank on the bogie B2, and supplies the second compressed air (compressed air) to air springs (not shown) disposed between the vehicle body B1 and the bogie B2 of the vehicle B. More specifically, the second tank in the embodiment includes a pair of auxiliary air tanks 33 and 33' which are respectively installed on both lateral sides of the bogie B2 (refer to FIG. 2). The pair of auxiliary air tanks 33 and 33' are connected to each other via a pipeline 33A with a differential pressure valve 34 interposed therebetween. Each of the pair of auxiliary air tanks 33 and 33' is capable of storing approximately 70 liters of the second compressed air. Hereinafter, the pressure of the second compressed air is referred to as an air spring (AS) pressure.

The additional emergency brake solenoid valve (opening and closing valve) 31 is a normally closed valve that maintains a closed state when energized where the vehicle B is run. When the additional emergency brake solenoid valve 31 receives the emergency brake control signal S3 from the break control device 10 (that is, when an emergency brake operation is performed), the additional emergency brake solenoid valve 31 opens. In a case where the energization of the vehicle B is shut off during an emergency (for example, in a case where an electricity failure occurs due to an earthquake, in a case where the vehicle B is derailed, or in a case where a pantograph is deviated from an overhead power line), the additional emergency brake solenoid valve 31 opens.

The additional emergency brake solenoid valve 31 is connected to the one auxiliary air tank 33 via a pipeline 33B, and is connected to the double check valve 32 via a pipeline 50. That is, the second compressed air having the AS pressure is supplied from the auxiliary air tank 33 to the additional emergency brake solenoid valve 31. When the emergency brake control signal S3 is input to the additional emergency brake solenoid valve 31 (that is, when an emergency brake operation is performed), the additional emergency brake solenoid valve 31 opens, and then the second compressed air inside the auxiliary air tank 33 is supplied as the emergency brake air to the double check valve 32 via the additional emergency brake solenoid valve 31.

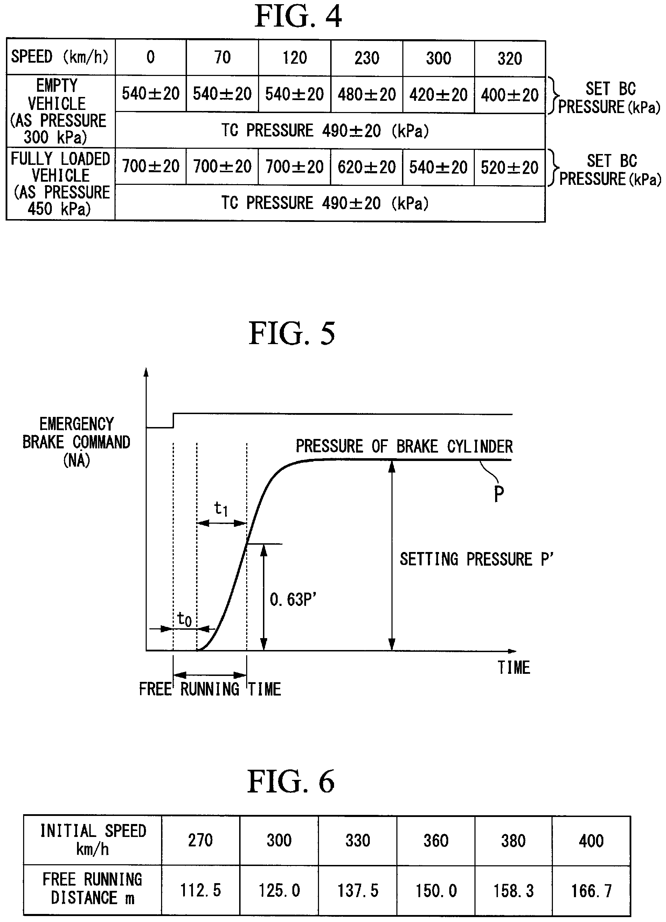

The pressure of the second compressed air inside the auxiliary air tanks 33 and 33', that is, the pressure (AS pressure) of the emergency brake air supplied to the double check valve 32 is lower than or equal to the pressure (BC pressure) of the brake control air that is supplied from the relay valve 13 to the double check valve 32. The relationship between the AS pressure and the BC pressure will be described later with reference to FIG. 4.

The double check valve (switching valve) 32 includes two inlet ports and one outlet port. One of the inlet ports of the double check valve 32 is connected to the additional emergency brake solenoid valve 31 via the pipeline 50. The other of the inlet ports of the double check valve 32 is connected to the relay valve 13 via the pipeline 13A. The outlet port of the double check valve 32 is connected to a pressure intensifier cylinder 40 (the brake cylinder A) via a pipeline 51.

The double check valve 32 supplies one compressed air having a higher pressure among the brake control air supplied from the supply air tank 22 via the relay valve 13 and the emergency brake air supplied from the auxiliary air tank 33 via the additional emergency brake solenoid valve 31, to the pressure intensifier cylinder 40.

The pressure intensifier cylinder 40 transforms the pressure of the compressed air supplied from the double check valve 32 into an oil pressure. The oil pressure generated by the pressure intensifier cylinder 40 operates caliper brakes D shown in FIG. 2 such that braking force is applied to the wheels D.

A portion of the compressed air generated by the compressor 20 is supplied to the auxiliary air tanks 33 and 33'.

The bogie B2 on which the auxiliary air tanks 33 and 33'are installed will be described with reference to FIGS. 2 and 3. FIG. 2 is a top view of the bogie B2 in the embodiment. FIG. 3 is a top view of a bogie in the related art which is a comparative example.

As shown in FIG. 2, in the embodiment, the auxiliary air tanks 33 and 33' are used as the second tanks which supply the second compressed air to the air springs between the vehicle body B1 and the bogie B2 of the vehicle B. The auxiliary air tank 33 is connected to the additional emergency brake solenoid valve 31 via the pipeline 33B. The additional emergency brake solenoid valve 31 is connected to the double check valve 32 via the pipeline 50.

The differential pressure valve 34 is installed in the middle of the pipeline 33A between the auxiliary air tank 33 and the auxiliary air tank 33'. The internal pressures of the two auxiliary air tanks 33 and 33' are maintained at the same value by the differential pressure valve 34.

In a case where the additional emergency brake solenoid valve 31 opens during an emergency, as the emergency brake air having the AS pressure, the second compressed air inside the auxiliary air tank 33 is supplied to the pressure intensifier cylinders 40, which are respectively provided on both lateral sides of the bogie B2, via the double check valve 32. The pressure intensifier cylinders 40 are respectively connected to caliper brake D of the wheel W via oil pressure pipes 41. Oil, which is a pressure fluid, is supplied from the pressure intensifier cylinders 40 to the caliper brakes D via the oil pressure pipes 41 such that braking force is applied to the wheels W.

Since the auxiliary air tanks 33 and 33' have substantially the same volume as that of the supply air tank 22, even if the second compressed air inside the one auxiliary air tank 33 is supplied as the emergency brake air to the pressure intensifier cylinder 40, a pressure difference which causes the operation of the differential pressure valve 34 does not occur between the auxiliary air tank 33 and the auxiliary air tank 33'. For this reason, characteristics of the air springs are not affected during emergency braking.

As shown in FIG. 2, in the embodiment, the auxiliary air tanks 33 and 33', the double check valve 32, and the pressure intensifier cylinders 40 are connected to each other on the same bogie B2 via the pipelines 33A, 33B, 50, and 51. For this reason, the devices are disposed very close to each other. Accordingly, when the additional emergency brake solenoid valve 31 is opened, the second compressed air inside the auxiliary air tank 33 is quickly supplied as the emergency brake air to the pressure intensifier cylinder 40 via the double check valve 32.

The emergency brake control signal S3 output from the brake control device 10 is transmitted to the additional emergency brake solenoid valve 31 via a coupler C shown in FIG. 2.

Unlike the aforementioned bogie B2 in the embodiment, the conventional bogie shown as a comparative example in FIG. 3 is not provided with the emergency pressure control device 30 configured to include the additional emergency brake solenoid valve 31 and the double check valve 32. For this reason, in the conventional bogie, the first compressed air stored in the main air tank 21 and the supply air tank 22 on the vehicle body B1, which are positioned away from the bogie B2, is transformed into the brake control air having the BC pressure via the electro-pneumatic change valve 11 and the relay valve 13 on the same vehicle body B1, and the brake control air is supplied to the pressure intensifier cylinders 40 on the bogie B2 via the pipeline 13A. For this reason, in the conventional bogie, it takes a long period of time for the internal pressure of the pressure intensifier cylinder 40 to reach the specified value, and for effective braking force to be eventually applied to the wheels W after an emergency brake operation is performed (when the emergency brake signal NA is output). That is, the free running time is increased.

In contrast, as shown in FIG. 4, in the vehicle brake apparatus 100 of the first embodiment, the set brake cylinder pressure (BC pressure) for emergency braking is determined in advance according to the speed and the weight of the vehicle.

The set BC pressure is set according to a control signal (not shown) from the brake control device 10. The weight of the vehicle B is changed according to the number of passengers and the weight of luggage of the vehicle B. There is a correlation between the weight of the vehicle B and the AS pressure of the second compressed air stored in the auxiliary air tanks 33 and 33'. During the operation of the vehicle B, the second compressed air is supplied from the auxiliary air tank 33 (or the auxiliary air tank 33') to the brake control device 10, and the brake control device 10 monitors the weight of the vehicle B based on the AS pressure of the second compressed air.

For example, as shown in FIG. 4, in a case where the AS pressure is 300 kPa, the brake control device 10 determines the weight of the vehicle B as a "empty vehicle weight". As shown in FIG. 4, in a case where the AS pressure is 450 kPa, the brake control device 10 determines the weight of the vehicle B as a "fully loaded vehicle weight".

The range of weight between the "empty vehicle weight" and the "fully loaded vehicle weight" may be classified into multiple weight ratings according to the AS pressure, which is not shown in detail in FIG. 4.

When the emergency brake command NA is input to the brake control device 10 during the operation of the vehicle B, the brake control device 10 determines the set BC pressure of the brake control air which has to be supplied to the pressure intensifier cylinder 40, based on the weight of the vehicle B that is determined according to the AS pressure as described above, and based on a speed signal input from a speed meter (not shown).

For example, as shown in FIG. 4, in a case where the AS pressure is 300 kPa, and the speed of the vehicle B is 230 km/h, the brake control device 10 determines 480 ± 20 kPa as the set BC pressure of the brake control air.

After the brake control device 10 determines the set BC pressure of the brake control air as described above, the brake control device 10 controls the electro-pneumatic change valve 11 such that the BC pressure of the brake control air, which is supplied from the relay valve 13 to the pressure intensifier cylinder 40, becomes the set BC pressure. More specifically, during the operation of the vehicle B, the brake control device 10 controls the opening of the electro-pneumatic change valve 11 in a feedback manner such that the BC pressure of the brake control air, which is supplied from the relay valve 13 to the pressure intensifier cylinder 40, becomes the set BC pressure (a pressure within an allowable range ± 20 kPa). In other words, the AC pressure of the pressure command air, which is supplied from the electro-pneumatic change valve 11 to the relay valve 13, is controlled in a feedback manner such that the BC pressure of the brake control air becomes the set BC pressure (a pressure within an allowable range ± 20 kPa).

During the operation of the vehicle B, the AS pressure of the second compressed air stored in the auxiliary air tanks 33 and 33' is always maintained to be lower than or equal to the BC pressure of the brake control air that is supplied from the relay valve 13 to the pressure intensifier cylinder 40 during emergency braking.

Hereinafter, in a conventional vehicle brake apparatus (corresponding to the conventional bogie shown in FIG. 3) which is not provided with the emergency pressure control device 30 in the first embodiment, and in the vehicle brake apparatus 100 (corresponding to the bogie B2 in the embodiment shown in FIG. 2) which is provided with the emergency pressure control device 30 in the first embodiment, a pressure change of the pressure intensifier cylinder (brake cylinder) 40 will be described with reference to FIGS. 5 to 8.

First, in the conventional vehicle brake apparatus according which is not provided with the emergency pressure control device 30, the pressure change of the pressure intensifier cylinder will be described with reference to FIG. 5.

In the conventional vehicle brake apparatus, since the brake control air having the BC pressure is supplied from the main air tank 21 and the supply air tank 22 which are positioned away from the bogie B2, it takes a predetermined length of time (free running time) for a brake cylinder pressure (represented by reference symbol P), which is applied to the pressure intensifier cylinder 40, to reach a specified value (lower limit value of the pressure required to generate an effective braking force: for example, 63.2% of a setting pressure P' (BC pressure) after an emergency brake operation is performed (when the emergency brake signal NA is output).

That is, in a case where a "dead time" is defined to be time t0 from when the emergency brake command NA is output until an increase in the brake cylinder pressure P of the pressure intensifier cylinder 40 is started, and a brake time constant is defined to be time t1 from when the increase in the brake cylinder pressure P is started until the brake cylinder pressure P reaches the specified value, the free running time is represented by the sum of the dead time t0 and the brake time constant t1.

FIG. 6 shows free running distances in this case. Each of the free running distances is a value that is obtained by multiplying the corresponding the free running time by the corresponding speed (initial speed) of the vehicle B when an emergency brake operation is performed. FIG. 6 shows the free running distance for each of the initial speeds in a case where the free running time is assumed to be 1.5 seconds.

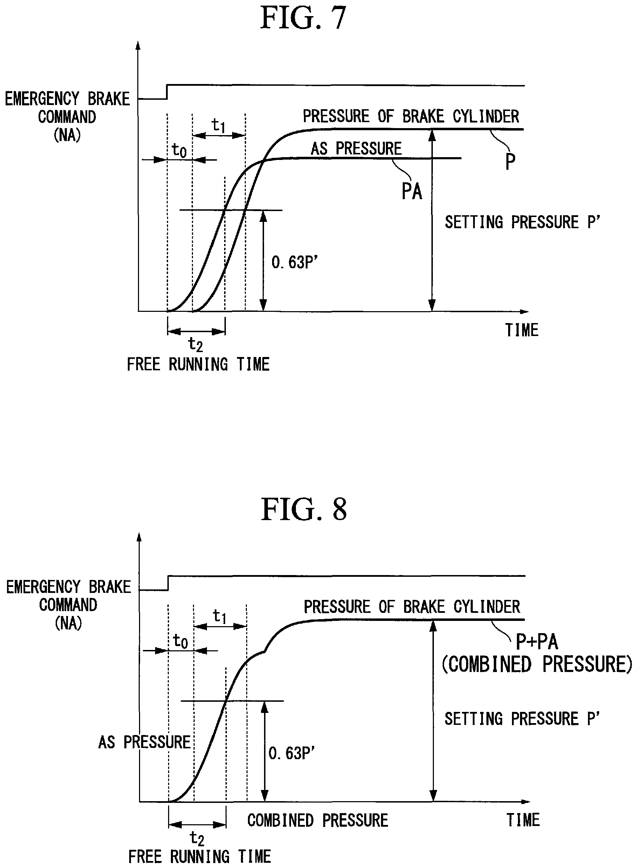

Hereinafter, in the vehicle brake apparatus 100 of the first embodiment which is provided with the emergency pressure control device 30, the pressure change of the pressure intensifier cylinder 40 will be described with reference to FIGS. 7 and 8.

Unlike the aforementioned conventional vehicle brake apparatus, in the vehicle brake apparatus 100 of the first embodiment, when the brake control device 10 outputs the emergency brake control signal S3 based on the emergency brake command NA, the additional emergency brake solenoid valve 31 of the emergency pressure control device 30 is opened.

Accordingly, the second compressed air having the AS pressure inside the auxiliary air tank 33 is supplied as the emergency brake air to the one inlet port of the double check valve 32 via the additional emergency brake solenoid valve 31. In contrast, when the emergency brake command NA is input to the brake control device 10, the brake control device 10 determines the set BC pressure of the brake control air which has to be supplied to the pressure intensifier cylinder 40, based on the weight of the vehicle B determined according to the AS pressure, and based on a speed signal input from the speed meter (not shown) (refer to FIG. 4).

After the brake control device 10 determines the set BC pressure of the brake control air as described above, the brake control device 10 controls the opening of the electro-pneumatic change valve 11 in a feedback manner such that the BC pressure of the brake control air, which is supplied from the relay valve 13 to the pressure intensifier cylinder 40, becomes the set BC pressure (a pressure within an allowable range ± 20 kPa). Accordingly, the brake control air having substantially the same BC pressure as the set BC pressure is supplied from the relay valve 13 to the other inlet port of the double check valve 32. As shown in FIG. 4, the BC pressure of the brake control air is controlled in a feedback manner, and thus, the BC pressure of the brake control air has an error of ± 20 kPa with respect to the set BC pressure.

The double check valve 32 selectively supplies one compressed air having a higher pressure among the brake control air and the emergency brake air to the pressure intensifier cylinder 40. The auxiliary air tanks 33 and 33', the additional emergency brake solenoid valve 31, and the double check valve 32 are connected to each other on the same bogie B2 via the pipelines 33A, 33B, and 50, and are disposed very close to each other. In contrast, the main air tank 21, the supply air tank 22, the brake control device 10, the electro-pneumatic change valve 11, and the relay valve 13 are installed on the vehicle body B1. The relay valve 13 is connected to the double check valve 32 on the bogie B2 via the pipeline 13A longer than the pipeline 50. For this reason, before the brake control air having the BC pressure reaches the pressure intensifier cylinder 40 via the double check valve 32, the emergency brake air having the AS pressure is quickly supplied to the pressure intensifier cylinder 40 via the double check valve 32.

That is, as shown in FIG. 7, in the vehicle brake apparatus 100 of the first embodiment, since the emergency brake air is supplied to the pressure intensifier cylinder 40 prior to the brake control air being supplied thereto, the internal pressure of the pressure intensifier cylinder 40 starts to be quickly increased from when the emergency brake command NA is generated. For this reason, unlike the conventional vehicle brake apparatus in which the "dead time t0" occurs, the "dead time t0" does not occur in the vehicle brake apparatus 100 of the embodiment.

As shown in FIG. 7, in the vehicle brake apparatus 100 of the embodiment, since the emergency brake air is supplied to the pressure intensifier cylinder 40 prior to the brake control air being supplied thereto, the free running time from when the emergency brake command NA is generated until the internal pressure of the pressure intensifier cylinder 40 reaches the specified value (63.2% of the setting pressure P') becomes time t2 (brake time constant) that is shorter than the free running time (t0 + t1) occurring in the conventional vehicle brake apparatus. As a result, the vehicle brake apparatus 100 of the embodiment is capable of considerably reducing the free running distance of the vehicle B during emergency braking compared to the conventional vehicle brake apparatus (the internal pressure (AS pressure) of the pressure intensifier cylinder 40 in this case is shown by reference symbol PA in FIG. 7). When the BC pressure of the brake control air supplied to the double check valve 32 is gradually increased (shown by reference symbol P in FIG. 7) over time, and becomes higher than the AS pressure of the emergency brake air, the compressed air supplied from the double check valve 32 to the pressure intensifier cylinder 40 is switched from the emergency brake air to the brake control air.

Accordingly, in the vehicle brake apparatus 100 on which the emergency pressure control device 30 in the first embodiment is mounted, as understood from FIG. 8 showing a combination of the AS pressure and the BC pressure, the free running time becomes time t2 that is shorter than the free running time (t1 + t1) occurring in the conventional vehicle brake apparatus. As a result, it is possible to also reduce the free running distances shown in FIG. 6, and to quickly perform an emergency stop during an emergency such as the occurrence of an earthquake.

The completely same emergency brake operation is also performed in a case where the additional emergency brake solenoid valve 31 of the emergency pressure control device 30 is opened due to the shutting off of electric power supplied from the overhead power line, instead of the emergency brake control signal S3 being output from the brake control device 10.

As described above, in the vehicle brake apparatus 100 of the first embodiment since the auxiliary air tanks 33 and 33' are provided on the bogie B2 of the vehicle B outside of the brake operation system 1, and supply the emergency brake air having the AS pressure during an emergency brake operation before the brake control air having the BC pressure is supplied from the normal air tanks 21 and 22, it is possible to reduce the length of each of the pipelines 33A, 33B, 50, and 51 between the auxiliary air tanks 33 and 33' and the pressure intensifier cylinder 40 that is the brake cylinder A. As a result, the second compressed air inside the auxiliary air tanks 33 and 33' can be quickly supplied as the emergency brake air to the pressure intensifier cylinder 40 via the short pipeline such that the internal pressure of the pressure intensifier cylinder 40 can be quickly increased to the specified value during an emergency brake operation.

In addition, since the second compressed air inside the auxiliary air tanks 33 and 33' provided on the bogie B2 of the vehicle B is directly supplied to the additional emergency brake solenoid valve 31 of the emergency pressure control device 30 which is opened during an emergency brake operation, it is possible to omit the installation of an air source, a pressure regulating valve, and a control device thereof which are additionally provided in the conventional brake system. As a result, it is possible to simplify the entire configuration of the vehicle brake apparatus 100.

In the vehicle brake apparatus 100 of the first embodiment, since the emergency pressure control device 30 includes the double check valve 32 that selectively supplies one compressed air having a higher pressure among the brake control air and the emergency brake air to the pressure intensifier cylinder 40; and the additional emergency brake solenoid valve 31 that opens the pipeline for supplying the second compressed air inside the auxiliary air tanks 33 and 33' to the double check valve 32 during an emergency brake operation, the emergency pressure control device 30 is capable of supplying the second compressed air inside the auxiliary air tanks 33 and 33' (positioned very close to the double check valve 32) to the double check valve 32 as the emergency brake air by opening the additional emergency brake solenoid valve 31 during an emergency brake operation such as the occurrence of an earthquake.

Since one compressed air having a higher pressure among the brake control air and the emergency brake air is selectively supplied from the double check valve 32 to the pressure intensifier cylinder 40, in a case where the BC pressure of the brake control air, which is supplied from the relay valve 13 to the double check valve 32 via the pipeline 13A, is still low, the emergency brake air is preferentially supplied from the auxiliary air tanks 33 and 33' to the pressure intensifier cylinder 40. Accordingly, it is possible to quickly increase the internal pressure of the pressure intensifier cylinder 40, and it is possible to effectively apply braking force to the wheels W.

In the vehicle brake apparatus 100 of the first embodiment, since the AS pressure of the second compressed air stored in the auxiliary air tanks 33 and 33' is lower than or equal to the BC pressure of the brake control air that is supplied from the relay valve 13 to the double check valve 32, even if the second compressed air inside the auxiliary air tanks 33 and 33' is preferentially supplied as the emergency brake air to the pressure intensifier cylinder 40 during an emergency brake operation, it is possible to prevent the occurrence of trouble such as the wheels W being locked and slipping without abnormally increasing the internal pressure of the pressure intensifier cylinder 40.

In the vehicle brake apparatus 100 of the first embodiment, since the auxiliary air tanks 33 and 33' are used as the second tanks which supply the second compressed air to the air springs between the bogie B2 and the vehicle body B1, it is not necessary to provide extra equipment such as the air source, the pressure regulating valve, and the control device thereof which are additionally provided in the conventional brake system, and it is possible to quickly increase the internal pressure of the pressure intensifier cylinder 40 to the specified value during an emergency brake operation by using the second compressed air inside the auxiliary air tanks 33 and 33' as the emergency brake air.

In the configuration of the vehicle brake apparatus 100 of the first embodiment, since the auxiliary air tanks 33 and 33' are used as the second tanks which are respectively provided on both right and left sides of a framework of the bogie B2 and supply the second compressed air to the air springs, the auxiliary air tanks 33 and 33' are connected to each other via the differential pressure valve 34, and the second compressed air inside the auxiliary air tanks 33 and 33' is supplied to the double check valve 32 via the pipelines 33A, 33B, and 50, it is possible to ensure a predetermined volume of the auxiliary air tanks on the framework of the bogie B2. As a result, it is possible to quickly increase the internal pressure of the pressure intensifier cylinder 40 to the specified value during an emergency brake operation.

In the first embodiment, examples of a condition for opening the additional emergency brake solenoid valve 31 of the emergency pressure control device 30 at "the occurrence of an abnormal event" include a case in which the brake control device 10 outputs the emergency brake control signal S3 based on the emergency brake command NA occurring when a driver performs an emergency brake operation, and a case in which electric power supplied to the vehicle B is shut off. In addition, at the "occurrence of an abnormal event" such as a decrease in the pressure of the main air reservoir (the main air tank 21), the occurrence of an unknown abnormal event in the vehicle B, or detection of the occurrence of P waves caused by an earthquake, the additional emergency brake solenoid valve 31 of the emergency pressure control device 30 may be opened.

In the first embodiment, at the "occurrence of an abnormal event", the additional emergency brake solenoid valve 31 of the emergency pressure control device 30 is opened based on the emergency brake command NA. In contrast, the additional emergency brake solenoid valve 31 is set to be closed within one to two seconds after the emergency brake command NA is output. Accordingly, sliding control of the BC pressure is not hindered.

In the first embodiment, a high-speed railroad vehicle for the Shinkansen or the like is exemplarily shown. The present invention can be applied to a conventional railroad vehicle including a bolsterless bogie on which air springs are mounted.

### (Second Embodiment)

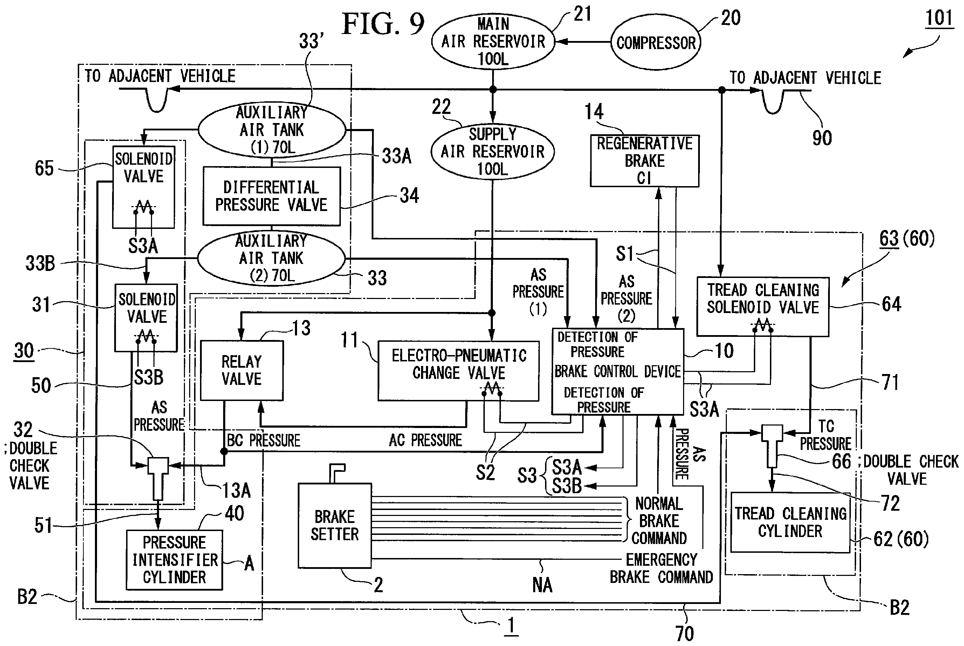

A vehicle brake apparatus 101 in a second embodiment of the present invention will be described with reference to FIGS. 9 to 14. In the vehicle brake apparatus 101 of the second embodiment, the same reference symbols are assigned to the same configuration elements as the vehicle brake apparatus 100 in the first embodiment, and a description thereof will not be repeated here.

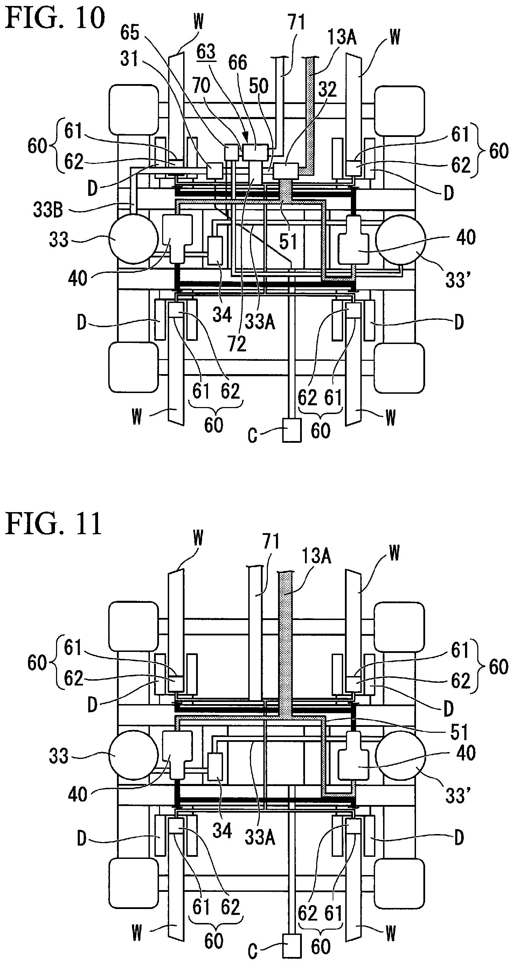

FIG. 9 is a schematic diagram showing the configuration of the vehicle brake apparatus 101 in the second embodiment. FIG. 10 is a view showing the piping of a bogie B2 in the second embodiment. In these drawings, reference symbol 60 represents a tread cleaning device. FIG. 11 is a view showing the piping of a conventional bogie as a comparative example.

The tread cleaning device 60 shown in FIGS. 9 and 10 includes an abrasive block 61 made of resin which is provided to be capable of coming into contact with or moving away from a thread of the corresponding wheel W for a rail (not shown), and cleans the tread of the wheel W while being in contact with the tread; a tread cleaning cylinder 62 that operates the abrasive block 61; and a cleaning air control device 63 that supplies tread cleaning air which operates the tread cleaning cylinder 62.

The cleaning air control device 63 is configured to include a tread cleaning solenoid valve 64 that is installed on the vehicle body B1; an additional cleaning solenoid valve 65 that is installed on the bogie B2; and a double check valve 66 that is installed on the bogie B2. During an emergency in which an urgent stop of the vehicle B is required, the cleaning air control device 63 quickly supplies emergency cleaning air (compressed air having the AS pressure) that is auxiliary compressed air for the tread cleaning cylinder 62, prior to supplying tread cleaning air (compressed air having a TC pressure).

Specifically, as the tread cleaning air, the tread cleaning solenoid valve 64 takes in compressed air from a common pipe 90 between vehicles, a portion of which is used as the brake control air.

The additional cleaning solenoid valve 65 is connected to one auxiliary air tank (in the embodiment, the auxiliary air tank 33') that is not connected to the additional emergency brake solenoid valve 31, out of the auxiliary air tanks (second tanks) 33 and 33' which supply the second compressed air to air springs (not shown) between the vehicle body B1 and the bogie B2 of the vehicle B. The additional cleaning solenoid valve 65 is an opening and closing valve that is opened based on an emergency brake control signal S3A from the brake control device 10.

The additional cleaning solenoid valve 65 is a normally closed valve that maintains a closed state when energized where the vehicle B is run. In addition to a case in which the emergency brake control signal S3A is output from the brake control device 10, in a case where the energization of the vehicle B is shut off during an emergency (for example, in a case where an electricity failure occurs due to an earthquake, in a case where the vehicle B is derailed, or in a case where a pantograph is deviated from an overhead power line), similar to the additional emergency brake solenoid valve 31, the additional cleaning solenoid valve 65 is opened.

The AS pressure of the second compressed air inside the auxiliary air tanks 33 and 33' is lower than or equal to the TC pressure of the tread cleaning air that is supplied to the double check valve 66 via the tread cleaning solenoid valve 64.

The double check valve 66 includes two inlet ports and one outlet port. One of the inlet ports of the double check valve 66 is connected to the additional cleaning solenoid valve 65 via a pipeline 70. The other of the inlet ports of the double check valve 66 is connected to the tread cleaning solenoid valve 64 via a pipeline 71 longer than the pipeline 70. The outlet port of the double check valve 66 is connected to the tread cleaning cylinder 62 via a pipeline 72.

The double check valve 66 supplies one compressed air having a higher pressure among the tread cleaning air supplied from the common pipe 90 via the tread cleaning solenoid valve 64 and the emergency cleaning air supplied from the auxiliary air tank 33' via the additional cleaning solenoid valve 65, to the tread cleaning cylinder 62.

The abrasive block 61 shown in FIG. 10 is pressed to the tread of the wheel W by the pressure of the compressed air supplied from the double check valve 66 to the tread cleaning cylinder 62. As a result, the tread of the wheel W is cleaned.

In the vehicle brake apparatus 101 of the second embodiment, the additional emergency brake solenoid valve 31 of the emergency pressure control device 30 connected to the auxiliary air tank 33, and the additional cleaning solenoid valve 65 of the tread cleaning device 60 connected to the auxiliary air tank 33' are opened according to the emergency brake control signal S3 (S3A and S3B) that is output from the brake control device 10 based on the emergency brake command NA.

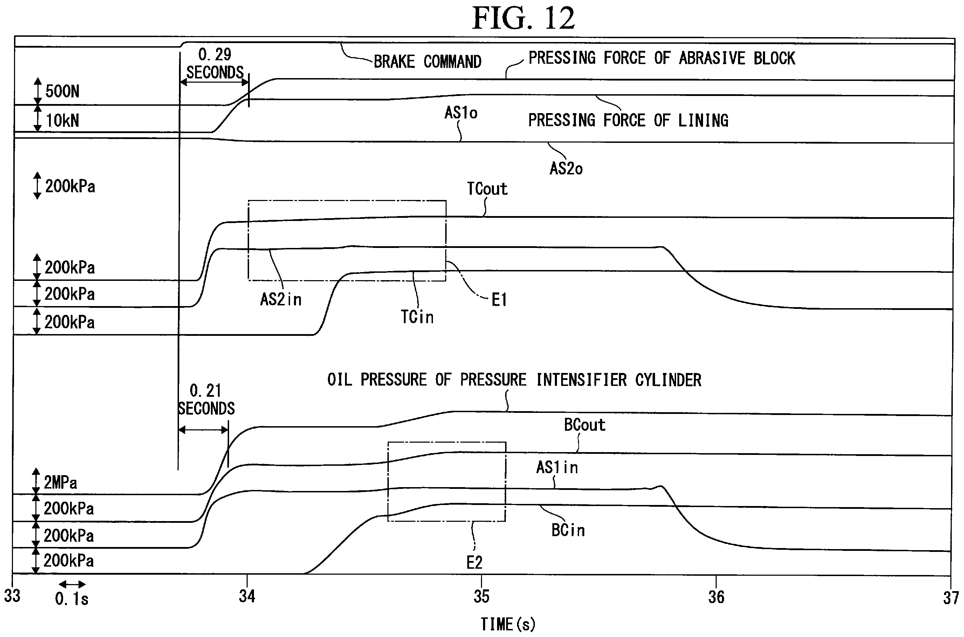

The operation of the vehicle brake apparatus 101 will be described in detail with reference to FIG. 12. In the vehicle brake apparatus 101 of the second embodiment, in a case where a driver performs an emergency brake operation such that the emergency brake command NA is output from the brake setter 2 to the brake control device 10, the emergency brake control signal S3 (S3A and S3B) is output from the brake control device 10 to the additional emergency brake solenoid valve 31 and the additional cleaning solenoid valve 65. Simultaneously, the emergency brake control signal S3A is also output from the brake control device 10 to the tread cleaning solenoid valve 64. Accordingly, the additional emergency brake solenoid valve 31, the additional cleaning solenoid valve 65, and the tread cleaning solenoid valve 64 are simultaneously opened.

The actual timing of the operation in this case is shown by arrow E1 in FIG. 12. The thread cleaning air having the TC pressure is supplied from the common pipe 90 between the vehicles B to the double check valve 66 via the tread cleaning solenoid valve 64 (supplied in a range of "TCin" to "TCout"), and the second compressed air having the AS pressure is supplied as the emergency cleaning air from the auxiliary air tank 33' to the double check valve 66 via the additional cleaning solenoid valve 65 (supplied in a range below "AS2in"). The double check valve 66 selectively supplies one compressed air having a higher pressure among the thread cleaning air and the emergency cleaning air to the tread cleaning cylinder 62. The auxiliary air tanks 33' and the double check valve 66 are connected to each other on the same bogie B2 via the pipeline 70, and are disposed very close to each other. For this reason, before the tread cleaning air supplied via the pipeline 71 longer than the pipeline 70 reaches the double check valve 66, the emergency cleaning air supplied from the auxiliary air tank 33' is quickly supplied to the tread cleaning cylinder 62 via the pipeline 70 and the double check valve 66.

That is, in the vehicle brake apparatus 101 of the second embodiment, since the emergency cleaning air is supplied to the tread cleaning cylinder 62 prior to the thread cleaning air being supplied thereto, the internal pressure of the tread cleaning cylinder 62 starts to be quickly increased from when the emergency brake command NA is generated. For this reason, unlike the conventional vehicle brake apparatus in which a "dead time" occurs, a "dead time" does not occur in the vehicle brake apparatus 101 of the embodiment. Accordingly, the tread cleaning cylinder 62 is operated within a very short period of time from the starting of the emergency brake operation such that the abrasive block 61 is capable of cleaning the corresponding wheel tread. As a result, the emergency brake operation (to be described later) can be effectively performed.

In the second embodiment, the braking of the wheels W for an emergency stop is operated simultaneously when the treads of the wheels W are cleaned. The actual timing of the operation in this case is shown by arrow E2 in FIG. 12. When the brake control device 10 outputs the emergency brake control signal S3A and the emergency brake control signal S3B based on the emergency brake command NA, the additional emergency brake solenoid valve 31 of the emergency pressure control device 30 is opened.

Accordingly, the brake control air having the BC pressure is supplied from the supply air tank 22 to the double check valve 32 via the relay valve 13 (supplied in a range of "BCin" to "BCout"), and the emergency brake air having the AS pressure is supplied from the auxiliary air tank 33 to the double check valve 32 via the additional emergency brake solenoid valve 31 (supplied in a range below "AS1in").

The double check valve 32 selectively supplies one compressed air having a higher pressure among the brake control air and the emergency brake air to the pressure intensifier cylinder 40. The auxiliary air tanks 33 and 33', the additional emergency brake solenoid valve 31, and the double check valve 32 are connected to each other on the same bogie B2 via the pipelines 33A, 33B, and 50, and are disposed very close to each other. In contrast, the main air tank 21, the supply air tank 22, the brake control device 10, the electro-pneumatic change valve 11, and the relay valve 13 are installed on the vehicle body B1. The relay valve 13 is connected to the double check valve 32 on the bogie B2 via the pipeline 13A longer than the pipeline 50. For this reason, before the brake control air having the BC pressure reaches the pressure intensifier cylinder 40 via the double check valve 32, the emergency brake air having the AS pressure is quickly supplied to the pressure intensifier cylinder 40 via the double check valve 32.

That is, as shown in FIG. 7, similar to the first embodiment, in the vehicle brake apparatus 101 of the second embodiment, since the emergency brake air is supplied to the pressure intensifier cylinder 40 prior to the brake control air being supplied thereto, the internal pressure of the pressure intensifier cylinder 40 starts to be quickly increased from when the emergency brake command NA is generated. For this reason, unlike the conventional vehicle brake apparatus in which the "dead time t0" occurs, the "dead time t0" does not occur in the vehicle brake apparatus 101 of the embodiment. Accordingly, similar to the first embodiment, it is possible to reduce the free running time of the vehicle B during emergency braking.

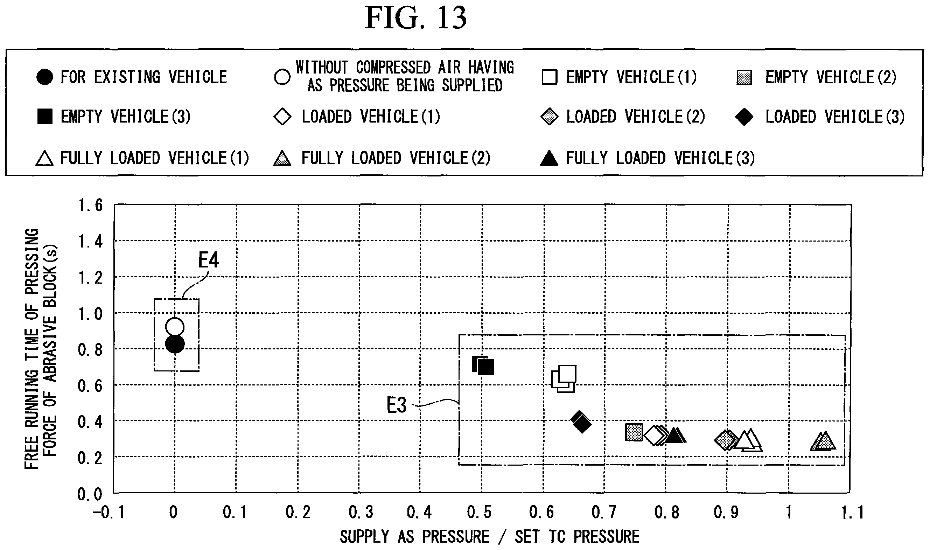

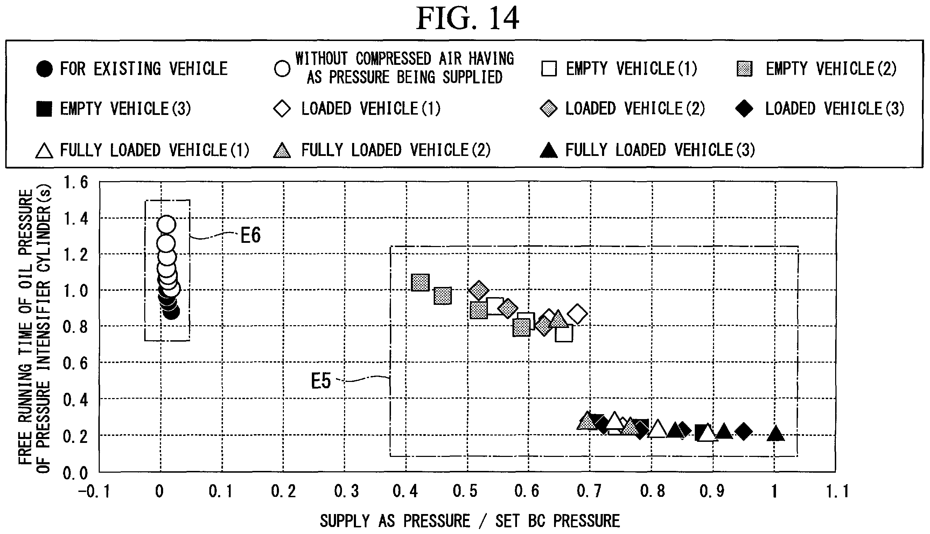

In a case where the second compressed air having the AS pressure inside the auxiliary air tanks 33 and 33' is used as the emergency cleaning air, measurement results of the free running time of the tread cleaning cylinder 62, and measurement results of the free running time of the pressure intensifier cylinder 40 will be described with reference to FIGS. 13 and 14. FIG. 13 is a graph showing a relationship between the free running time of the tread cleaning cylinder 62 (the free running time of the pressing force of the abrasive block) and "a supply A/S pressure / a set TC pressure (the set TC pressure is a constant value)". FIG. 14 is a graph showing a relationship between the free running time of the pressure intensifier cylinder 40 (the free running time of the oil pressure of the pressure intensifier cylinder) and "the supply A/S pressure / the set BC pressure (the set BC pressure is a constant value)".

In FIGS. 13 and 14, ranges E3 and E5 are shown for a case in which the second compressed air having the AS pressure is preferentially supplied from the auxiliary air tanks 33 and 33' in "empty vehicles (represented by rectangular plots), "loaded vehicles (represented by rhomboidal plots), and "fully loaded vehicles (represent by colored circular plots), a range E4 is shown for a case in which the second compressed air having the AS pressure is not supplied (represented by a "white circular plot: ○"), and a range E 6 is shown for an existing vehicle (represented by an "black circular plot: ●). FIGS. 13 and 14 show (1) a case in which the AS pressures of the auxiliary air tank 33 and the auxiliary air tank 33' are set equal to a set value, (2) a case in which the AS pressure of the auxiliary air tank 33 is lower by 60 kPa than the set value, and the AS pressure of the auxiliary air tank 33' is higher by 60 kPa than the set value, (3) a case in which the AS pressure of the auxiliary air tank 33 is higher by 60 kPa than the set value, and the AS pressure of the auxiliary air tank 33' is lower by 60 kPa than the set value.

The following confirmation can be made based on the measurement results in FIGS. 13 and 14: in a case where the second compressed air having the AS pressure is supplied from the auxiliary air tanks 33 and 33' prior to the tread cleaning air having the TC pressure or the brake control air having the BC pressure being supplied (shown by the ranges E3 and E5), the free running time of the tread cleaning cylinder 62 and the free running time of the pressure intensifier cylinder 40 are reduced regardless of the value of the pressure ratio, compared to a case in which the second compressed air having the AS pressure is not supplied (shown by the ranges E4 and E6).

Specifically, in FIG. 13, the free running time is confirmed to be reduced from 0.8 seconds to 0.3 seconds at a pressure ratio (the supply AS pressure / the set TC pressure) of 0.66 or greater, and in FIG. 14, the free running time is confirmed to be reduced from 0.95 seconds to 0.2 seconds at a pressure ratio (the supply AS pressure / the set BC pressure) of 0.66 or greater. Also, in a case where the pressure ratio is less than 0.66 in FIGS. 13 and 14, the compressed air having at least 50% of the set TC pressure and 40% of the set BC pressure is preferentially supplied, and certain effects are obtained.

As described above, the vehicle brake apparatus 101 in the second embodiment includes the tread cleaning device 60 that operates the abrasive block 61 by supplying the tread cleaning air having the TC pressure to the tread cleaning cylinder 62 which operates the abrasive block 61. When an emergency brake operation is performed, the tread cleaning device 60 supplies the emergency cleaning air, which has a pressure (AS pressure) lower than or equal to the TC pressure of the tread cleaning air, to the tread cleaning cylinder 62 prior to supplying the tread cleaning air thereto. In the vehicle brake apparatus 101 of the second embodiment, the tread cleaning cylinder 62 is operated within a very short period of time from the starting of an emergency brake operation such that the abrasive block 61 is capable of cleaning the corresponding wheel tread. As a result, the subsequent emergency brake operation can be effectively performed.

In the vehicle brake apparatus 101 of the second embodiment, since the auxiliary air tank (second tank) 33' is used as a supply source of the emergency cleaning air which supplies the second compressed air to the air springs between the bogie B2 and the vehicle body B1, it is not necessary to provide special equipment in a conventional tread cleaning system. For this reason, the emergency cleaning air is supplied from the auxiliary air tank 33'such that the internal pressure of the tread cleaning cylinder 62 can be quickly increased to a specified value (lower limit value of the pressure required for the abrasive block 61 to effectively clean the corresponding wheel tread).

In addition, it is possible to reduce the length of the pipeline between the auxiliary air tank 33' and the tread cleaning cylinder 62 of the tread cleaning device 60 by using the auxiliary air tank (second tank) 33', which supplies the second compressed air to the air springs between the vehicle body B1 and the bogie B2, as the supply source of the emergency cleaning air. Accordingly, the second compressed air inside the auxiliary air tank 33' is quickly supplied as the emergency cleaning air to the tread cleaning cylinder 62 via the short pipeline. As a result, it is possible to quickly increase the internal pressure of the tread cleaning cylinder 62 to the specified value.

The vehicle brake apparatus 101 in the second embodiment adopts a configuration in which the second tanks are respectively installed on both lateral sides of the bogie B2 and are configured to include the pair of the auxiliary air tanks 33 and 33' which are connected to each other via the differential pressure valve 34, the second compressed air inside the one auxiliary air tank 33 is used as the emergency brake air, and the second compressed air inside the other auxiliary air tank 33' is used as the emergency cleaning air.

That is, in the vehicle brake apparatus 101 of the second embodiment, the auxiliary air tanks 33 and 33' forming the second tanks are used as air sources, and supply emergency compressed air (emergency brake air and emergency cleaning air) to the pressure intensifier cylinder 40 and the tread cleaning cylinder 62 such that the compressed air can be quickly supplied at a set pressure.

In the second embodiment, examples of a condition for opening the additional emergency brake solenoid valve 31 and the additional cleaning solenoid valve 65 at "the occurrence of an abnormal event" include a case in which the brake control device 10 outputs the emergency brake control signal S3 (S3A and S3B) based on the emergency brake command NA occurring when a driver performs an emergency brake operation, and a case in which electric power supplied to the vehicle B is shut off. In addition, at the "occurrence of an abnormal event" such as a decrease in the pressure of the main air reservoir (the main air tank 21), the occurrence of an unknown abnormal event in the vehicle B, or detection of the occurrence of P waves caused by an earthquake, the additional emergency brake solenoid valve 31 and the additional cleaning solenoid valve 65 may be opened.

The embodiments of the present invention have been described in detail with reference to the accompanying drawings. The specific configuration is not limited to those in the embodiments, and changes can be made to the design insofar as the changes do not depart from the concept of the present invention.

### [Industrial Applicability]

According to the present invention, it is possible to provide a vehicle brake apparatus capable of reducing the free running time of a vehicle during emergency braking by adopting a simple configuration. That is, according to the present invention, it is possible to reduce the free running time of the vehicle during emergency braking. Accordingly, particularly, in a vehicle moving at a high speed, the aforementioned effects become a great merit in the viewpoint of improved safety. As a result, the present invention has sufficient industrial applicability.

### [Brief Description of the Reference Symbols]

1: BRAKE OPERATION SYSTEM
10: BRAKE CONTROL DEVICE
20: MAIN AIR TANK (FIRST TANK)
21: SUPPLY AIR TANK (FIRST TANK)
30: EMERGENCY PRESSURE CONTROL DEVICE
31: ADDITIONAL EMERGENCY BRAKE SOLENOID VALVE (FIRST OPENING AND CLOSING VALVE)
32: DOUBLE CHECK VALVE (SWITCHING VALVE)
33: AUXILIARY AIR TANK (SECOND TANK)
33': AUXILIARY AIR TANK (SECOND TANK)
40: PRESSURE INTENSIFIER CYLINDER (BRAKE CYLINDER)
60: TREAD CLEANING DEVICE
61: ABRASIVE BLOCK
62: TREAD CLEANING CYLINDER
63: CLEANING AIR CONTROL DEVICE
64: TREAD CLEANING SOLENOID VALVE
65: ADDITIONAL CLEANING SOLENOID VALVE (SECOND OPENING AND CLOSING VALVE)
66: DOUBLE CHECK VALVE
100: VEHICLE BRAKE APPARATUS
101: VEHICLE BRAKE APPARATUS
B: VEHICLE
B1: VEHICLE BODY
B2: BOGIE
W: WHEEL
D: CALIPER BRAKE

## Claims

1. A vehicle brake apparatus (100) including a first pressure control device (10) that transforms a first compressed air inside a first tank (21, 22) provided in a vehicle body (B1) on a bogie (B2) of a vehicle (B) into a brake control air having a predetermined pressure and supplies the brake control air to a brake cylinder (40) which applies a braking force to a wheel (W) provided on the bogie (B2), the vehicle brake apparatus comprising:
a second tank (33, 33') that is installed on the bogie (B2) and is independent from the first tank (21, 22); and
a second pressure control device (30) that supplies a second compressed air inside the second tank (33, 33') to the brake cylinder (40) as an emergency brake air prior to the brake control air being supplied from the first pressure control device (10) to the brake cylinder (40) when an emergency brake operation is performed, and wherein
the second tank (33, 33') is an auxiliary air tank that supplies the second compressed air to an air spring (AS) installed between the bogie (B2) and the vehicle body (B1).

2. The vehicle brake apparatus according to claim 1,
wherein the second pressure control device (30) includes:
a switching valve (32) that supplies one compressed air having a higher pressure among the brake control air and the emergency brake air to the brake cylinder (40); and
an opening and closing valve (31) which is inserted into a pipeline connecting the second tank (33, 33') with the switching valve, and opens when the emergency brake operation is performed.

3. The vehicle brake apparatus according to claim 1 or 2,
wherein the pressure of the emergency brake air is lower than or equal to the pressure of the brake control air.

4. The vehicle brake apparatus according to any one of claims 1 to 3,
wherein the second tank (33, 33') includes a pair of the auxiliary air tanks which are respectively installed on both lateral sides of the bogie (B2),
wherein the pair of the auxiliary air tanks are connected to each other via a differential pressure valve (34), and
wherein the second compressed air inside one of the auxiliary air tanks is used as the emergency brake air.

5. The vehicle brake apparatus according to any one of claims 1 to 4, further comprising:
a tread cleaning device (60) that operates an abrasive block (61) by supplying a tread cleaning air to a tread cleaning cylinder (62) which operates the abrasive block,
wherein the tread cleaning device (60) supplies an emergency cleaning air, which has a pressure lower than or equal to the pressure of the tread cleaning air, to the tread cleaning cylinder (62) prior to supplying the tread cleaning air when the emergency brake operation is performed.

6. The vehicle brake apparatus according to claim 5,
wherein the second compressed air inside the second tank (33, 33') is used as the emergency cleaning air for a tread cleaning.

7. The vehicle brake apparatus according to claim 6,
wherein the second tank (33, 33') includes a pair of the auxiliary air tanks which are respectively installed on both lateral sides of the bogie (B2),
wherein the pair of the auxiliary air tanks are connected to each other via a differential pressure valve,
wherein the second compressed air inside one of the auxiliary air tanks is used as the emergency brake air,
wherein the second compressed air inside the other of the auxiliary air tanks is used as the emergency cleaning air, and
wherein the pair of the auxiliary air tanks supply the emergency brake air and the emergency cleaning air when a first opening and closing valve (31) and a second opening and closing valve (65) are opened and closed which are installed corresponding to the pair of the auxiliary air tanks.

## Patentansprüche

1. Fahrzeugbremsvorrichtung (100), die eine erste Drucksteuervorrichtung (10), die eine erste Druckluft innerhalb eines ersten Tanks (21, 22), der in einem Fahrzeugaufbau (B1) an einem Drehgestell (B2) eines Fahrzeugs (B) vorgesehen ist, in eine Bremssteuerluft mit einem vorgegebenen Druck umwandelt und die Bremssteuerluft einem Bremszylinder (40) zuführt, der eine Bremskraft auf ein Rad (W) ausübt, das am Drehgestell (B2) vorgesehen ist, wobei die Fahrzeugbremsvorrichtung aufweist:
einen zweiten Tank (33, 33'), der am Drehgestell (B2) installiert ist und vom ersten Tank (21, 22) unabhängig ist; und
eine zweite Drucksteuervorrichtung (30), die eine zweite Druckluft innerhalb des zweiten Tanks (33, 33') dem Bremszylinder (40) als eine Notbremsluft zuführt, bevor die Bremssteuerluft von der ersten Drucksteuervorrichtung (10) dem Bremszylinder (40) zugeführt wird, wenn ein Notbremsvorgang durchgeführt wird, und wobei
der zweite Tank (33, 33') ein Zusatzlufttank ist, der die zweite Druckluft einer Luftfeder (AS) zuführt, die zwischen dem Drehgestell (B2) und dem Fahrzeugaufbau (B1) installiert ist.

2. Fahrzeugbremsvorrichtung nach Anspruch 1,
wobei die zweite Drucksteuervorrichtung (30) aufweist:
ein Schaltventil (32), das dem Bremszylinder (40) eine Druckluft zuführt, die einen unter der Bremssteuerluft und der Notbremsluft höheren Druck aufweist; und
ein öffnendes und schließendes Ventil (31), das in eine Leitung eingesetzt ist, die den zweiten Tank (33, 33') mit dem Schaltventil verbindet, und sich öffnet, wenn der Notbremsvorgang durchgeführt wird.

3. Fahrzeugbremsvorrichtung nach Anspruch 1 oder 2,
wobei der Druck der Notbremsluft niedriger oder gleich dem Druck der Bremssteuerluft ist.

4. Fahrzeugbremsvorrichtung nach einem der Ansprüche 1 bis 3,
wobei der zweite Tank (33, 33'), ein Paar der Zusatzlufttanks aufweist, die jeweils auf beiden lateralen Seiten des Drehgestells (B2) installiert sind,
wobei das Paar der Zusatzlufttanks über ein Differenzdruckventil (34) miteinander verbunden ist, und
wobei die zweite Druckluft innerhalb eines der Zusatzlufttanks als die Notbremsluft verwendet wird.

5. Fahrzeugbremsvorrichtung nach einem der Ansprüche 1 bis 4, die ferner aufweist:
eine Laufflächenreinigungsvorrichtung (60), die einen Schleifstein (61) durch Zuführen von Laufflächenreinigungsluft zu einem Laufflächenreinigungszylinder (62) betätigt, der den Schleifstein betätigt,
wobei die Laufflächenreinigungsvorrichtung (60) eine Notreinigungsluft, die einen Druck aufweist, der niedriger oder gleich dem Druck der Laufflächenreinigungsluft ist, dem Laufflächenreinigungszylinder (62) zuführt, bevor die Laufflächenreinigungsluft zugeführt wird, wenn der Notbremsvorgang durchgeführt wird.

6. Fahrzeugbremsvorrichtung nach Anspruch 5,
wobei die zweite Druckluft innerhalb des zweiten Tanks (33, 33') als die Notreinigungsluft für eine Laufflächenreinigung verwendet wird.

7. Fahrzeugbremsvorrichtung nach Anspruch 6,
wobei der zweite Tank (33, 33') ein Paar der Zusatzlufttanks aufweist, die jeweils auf beiden lateralen Seiten des Drehgestells (B2) installiert sind,
wobei das Paar der Zusatzlufttanks über ein Differenzdruckventil miteinander verbunden ist,
wobei die zweite Druckluft innerhalb eines der Zusatzlufttanks als die Notbremsluft verwendet wird,
wobei die zweite Druckluft innerhalb des anderen der Zusatzlufttanks als die Notreinigungsluft verwendet wird, und
wobei das Paar der Zusatzlufttanks die Notbremsluft und die Notreinigungsluft zuführen, wenn ein erstes öffnendes und schließendes Ventil (31) und ein zweites öffnendes und schließendes Ventil (65) geöffnet und geschlossen werden, die entsprechend zum Paar der Zusatzlufttanks installiert sind.

## Revendications

1. Système de frein de véhicule (100), comprenant un premier dispositif de commande de pression (10) qui convertit un premier air comprimé à l'intérieur d'un premier réservoir (21, 22) prévu dans une caisse de véhicule (B1) sur un bogie (B2) du véhicule (B) en un air de commande de frein à pression définie, et refoule l'air de commande de frein vers un cylindre de frein (40) appliquant une force de freinage sur une roue (W) prévue sur le bogie (B2), ledit système de frein de véhicule comprenant :
un deuxième réservoir (33, 33') monté sur le bogie (B2) et indépendant du premier réservoir (21, 22) ; et
un deuxième dispositif de commande de pression (30) refoulant un deuxième air comprimé à l'intérieur du deuxième réservoir (33, 33') vers le cylindre de frein (40) en tant qu'air de frein de secours, préalablement au refoulement de l'air de commande de frein vers le cylindre de frein (40) par le premier dispositif de commande de pression (10), quand un freinage de secours est exécuté, et où
le deuxième réservoir (33, 33') est un réservoir d'air auxiliaire refoulant le deuxième air comprimé vers un ressort pneumatique (AS) monté entre le bogie (B2) et la caisse de véhicule (B1).

2. Système de frein de véhicule selon la revendication 1, où le deuxième dispositif de commande de pression (30) comprend :
une vanne d'inversion (32) refoulant vers le cylindre de frein (40) l'air comprimé dont la pression est supérieure entre l'air de commande de frein et l'air de frein de secours ; et
une vanne d'ouverture/de fermeture (31) introduite dans une conduite reliant le deuxième réservoir (33, 33') à la vanne d'inversion, et ouverte quand le freinage de secours est exécuté.

3. Système de frein de véhicule selon la revendication 1 ou la revendication 2,
où la pression de l'air de frein de secours est inférieure ou égale à la pression de l'air de commande de frein.

4. Système de frein de véhicule selon l'une des revendications 1 à 3, où le deuxième réservoir (33, 33') comprend une paire de réservoirs d'air auxiliaires montés chacun sur un côté latéral du bogie (B2),
où les réservoirs de la paire de réservoirs d'air auxiliaires sont reliés l'un à l'autre par une vanne à pression différentielle (34), et
où le deuxième air comprimé à l'intérieur d'un des réservoirs d'air auxiliaires est utilisé comme air de frein de secours.

5. Système de frein de véhicule selon l'une des revendications 1 à 4, comprenant en outre :
un dispositif de nettoyage de bande de roulement (60) actionnant un bloc abrasif (61) par refoulement d'un air de nettoyage de bande vers un cylindre de nettoyage de bande de roulement (62) actionnant le bloc abrasif,
où le dispositif de nettoyage de bande de roulement (60) refoule vers le cylindre de nettoyage de bande de roulement (62) un air de nettoyage de secours dont la pression est inférieure ou égale à la pression de l'air de nettoyage de bande, préalablement au refoulement de l'air de nettoyage de bande quand le freinage de secours est exécuté.

6. Système de frein de véhicule selon la revendication 5,
où le deuxième air comprimé à l'intérieur du deuxième réservoir (33, 33') est utilisé comme air de nettoyage de secours pour un nettoyage de bande de roulement.

7. Système de frein de véhicule selon la revendication 6,
où le deuxième réservoir (33, 33') comprend une paire de réservoirs d'air auxiliaires montés chacun sur un côté latéral du bogie (B2),
où les réservoirs de la paire de réservoirs d'air auxiliaires sont reliés l'un à l'autre par une vanne à pression différentielle,
où le deuxième air comprimé à l'intérieur d'un des réservoirs d'air auxiliaires est utilisé comme air de frein de secours,
où le deuxième air comprimé à l'intérieur de l'autre réservoir d'air auxiliaire est utilisé comme air de nettoyage de secours, et
où les deux réservoirs d'air auxiliaires refoulent l'air de frein de secours et l'air de nettoyage de secours quand une première vanne d'ouverture/de fermeture (31) et une deuxième vanne d'ouverture/de fermeture (65) montées de manière à correspondre aux deux réservoirs d'air auxiliaires sont ouvertes et fermées.
